# EUROPEAN PATENT APPLICATION

(11) **EP 4 665 004 A1**
(43) Date of publication of application: **17.12.2025**
(21) Application number: 23920367.2
(22) Date of filing: 07.02.2023
(51) Int. Cl.: H04W 52/02

(54) **METHOD FOR TRANSMITTING DOWNLINK INFORMATION, METHOD FOR RECEIVING DOWNLINK INFORMATION, APPARATUS, AND READABLE STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2023/074851
(87) International publication number: WO 2024/164155

(57) **Abstract**

The present invention provides a method for transmitting downlink information, a method for receiving downlink information, an apparatus, and a readable storage medium. The method for transmitting the downlink information comprises: transmitting a first type of downlink information to a user equipment in a first time period of a discontinuous transmission (DTX) state, wherein the first time period is a time period in which in the DTX state, at least part of downlink information is not required to be transmitted. In the method of the present invention, in a first time period in which a network device is in a DTX state, transmission of downlink information can be reduced to achieve energy saving; in addition, the network device can still transmit the first type of downlink information in the first time period so as to ensure that timely communication can be achieved.

## Description

### TECHNICAL FIELD

The present disclosure relates to the field of wireless communication technology, and in particular to a method, an apparatus for sending and receiving downlink information, and a readable storage medium.

### BACKGROUND

Network energy saving is a potential topic of Release 18 (R18) of the 3GPP protocol, which discusses how to save energy for base stations and networks. One possible energy saving manner is the discontinuous transmission (DTX) mechanism of the base station. In the DTX state, the base station does not need to send certain downlink channels or downlink signals.

### SUMMARY

The present disclosure provides a method, an apparatus for sending and receiving downlink information and readable storage medium.

In a first aspect, the present disclosure provides a method for sending downlink information, performed by a network device, the method including:
sending a first type of downlink information to a user equipment in a first time period of a discontinuous transmission DTX state; wherein the first time period is a time period in which at least part of the downlink information is not required to be sent in the DTX state.

In the method of the present disclosure, in a first time period when the network device is in a DTX state, the sending of downlink information can be reduced to achieve energy saving; in addition, the network device can still send the first type of downlink information in the first time period, to ensure timely communication can be achieved.

In some possible implementations, sending a first type of downlink information to a user equipment in a first time period of a discontinuous transmission DTX state includes:
sending the first type of downlink information to the user equipment on a first carrier, in the first time period when the first carrier is in the DTX state.

In some possible implementations, the first type of downlink information is: downlink information scheduled before a start moment of the first time period and having a sent moment within the first time period.

In some possible implementations, the first type of downlink information is one of the following:
a physical downlink shared channel PDSCH;
an aperiodic channel state information reference signal CSI-RS.

In some possible implementations, the first type of downlink information is at least one of the following:
a synchronization signal block SSB;
a physical downlink control channel PDCCH transmitted in a first common search space CSS;
a PDSCH scheduled by downlink control information DCI in the first CSS.

In some possible implementations, the method further includes:
stopping sending a second type of downlink information on a first carrier, in the first time period when the first carrier is in the DTX state.

In some possible implementations, the second type of downlink information is: semi-persistent transmission downlink information activated before a start moment of the first time period.

In some possible implementations, the second type of downlink information is one of the following:
a semi-persistent scheduling PDSCH;
a semi-persistent CSI-RS.

In some possible implementations, the method further includes:
sending indication information to the user equipment, wherein the indication information is used to indicate that the network device will enter the DTX state.

In some possible implementations, the second type of downlink information is at least one of the following:
a periodic CSI-RS;
dedicated DCI sent to the user equipment;
DCI sent in user equipment specific search space USS.

In a second aspect, the present disclosure provides a method for receiving downlink information, performed by a user equipment, the method including:
monitoring and receiving a first type of downlink information sent by a network device in a first time period when the network device is in a DTX state, wherein the first time period is a time period in which at least part of the downlink information is not required to be sent in the DTX state.

In the method of the present disclosure, in a first time period when the network device is in a DTX state, the user equipment can still monitor the first type of downlink information, so as to timely communicate with the network device.

In some possible implementations, monitoring and receiving a first type of downlink information in a first time period when the network device is in a DTX state includes:
monitoring and receiving the first type of downlink information sent by the network device on a first carrier, in a case that the network device is in the first time period when the first carrier is in the DTX state.

In some possible implementations, the first type of downlink information is: downlink information scheduled before a start moment of the first time period and having a sent moment within the first time period.

In some possible implementations, the first type of downlink information is one of the following:
a physical downlink shared channel PDSCH;
an aperiodic channel state information reference signal CSI-RS.

In some possible implementations, the first type of downlink information is at least one of the following:
an SSB;
a PDCCH transmitted in a first CSS;
a PDSCH scheduled by DCI in the first CSS.

In some possible implementations, the method further includes:
not monitoring a second type of downlink information on a first carrier, in the first time period when the first carrier is in the DTX state.

In some possible implementations, the second type of downlink information is: semi-persistent transmission downlink information activated before a start moment of the first time period.

In some possible implementations, the second type of downlink information is one of the following:
a semi-persistent scheduling PDSCH;
a semi-persistent CSI-RS.

In some possible implementations, the method further includes:
determining that the second type of downlink information is deactivated after receiving the indication information sent by the network device, wherein the indication information is used to indicate that the network device will enter the DTX state.

In some possible implementations, the second type of downlink information is at least one of the following:
a periodic CSI-RS;
dedicated DCI of the user equipment;
DCI sent in user equipment specific search space USS.

In a third aspect, the present disclosure provides a network device. The network device includes a transceiver module, wherein the transceiver module can be used to support the communication apparatus for communication.

When executing the steps described in the above first aspect, the transceiver module is configured to send a first type of downlink information to a user equipment in a first time period of a discontinuous transmission DTX state; wherein the first time period is a time period in which at least part of the downlink information is not required to be sent in the DTX state.

In a fourth aspect, the present disclosure provides a user equipment, which includes a transceiver module, wherein the transceiver module can be used to support a communication apparatus for communication.

When executing the steps described in the above second aspect, the transceiver module is configured to monitor and receive a first type of downlink information sent by a network device in a first time period when the network device is in a DTX state, wherein the first time period is a time period in which at least part of the downlink information is not required to be sent in the DTX state.

In a fifth aspect, the present disclosure provides a communication apparatus, including a processor and a memory; the memory is used to store a computer program; the processor is used to execute the computer program to implement the first aspect or any possible design of the first aspect.

In a sixth aspect, the present disclosure provides a communication apparatus, including a processor and a memory; the memory is used to store a computer program; the processor is used to execute the computer program to implement the second aspect or any possible design of the second aspect.

In a seventh aspect, the present disclosure provides a computer-readable storage medium, wherein the computer-readable storage medium stores instructions (or computer programs, programs), which enable the computer to execute the first aspect or any possible design of the first aspect when called and executed on a computer.

In an eighth aspect, the present disclosure provides a computer-readable storage medium, wherein the computer-readable storage medium stores instructions (or computer programs, programs), which enable the computer to execute the second aspect or any possible design of the second aspect when called and executed on a computer.

In a ninth aspect, the present disclosure provides a communication system, including a network device for executing the method of the first aspect and a user equipment for executing the method of the third aspect.

It should be understood that the above general description and the detailed description below are only exemplary and explanatory, and cannot limit the present disclosure.

### BRIEF DESCRIPTION OF THE DRAWINGS

The drawings described herein are used to provide further understanding of the embodiments of the present disclosure and constitute a part of the present application. The schematic embodiments of the embodiments of the present disclosure and their descriptions are used to explain the embodiments of the present disclosure and do not constitute improper limitations on the embodiments of the present disclosure. In the drawings:
The drawings herein are incorporated into the specification and constitute a part of the specification, illustrate embodiments consistent with the present disclosure, and are used to explain the principles of the present disclosure together with the specification.
FIG. 1 is a schematic diagram of a wireless communication system architecture provided by an embodiment of the present disclosure;
FIG. 2 is a flow chart of a method for sending and receiving downlink information provided by an embodiment of the present disclosure;
FIG. 3 is another flow chart of a method for sending and receiving downlink information provided by an embodiment of the present disclosure;
FIG. 4 is a schematic diagram of the DTX cycle provided by an embodiment of the present disclosure;
FIG. 5 is another flow chart of a method for sending and receiving downlink information provided by an embodiment of the present disclosure;
FIG. 6 is a structural diagram of a network device provided by an embodiment of the present disclosure;
FIG. 7 is a structural diagram of a user equipment provided by an embodiment of the present disclosure.

### DETAILED DESCRIPTION

The embodiments of the present disclosure are further described in conjunction with the drawings and specific implementations.

The example embodiments will be described in detail here, and examples thereof are shown in the drawings. When the following description refers to the drawings, unless otherwise indicated, the same numbers in different drawings represent the same or similar elements. The implementations described in the following example embodiments do not represent all implementations consistent with the embodiments of the present disclosure. Instead, they are merely examples of apparatuses and methods consistent with some aspects of the present disclosure as detailed in the appended claims.

The terms used in the embodiments of the present disclosure are only for the purpose of describing specific embodiments and are not intended to limit the embodiments of the present disclosure. The singular forms "one" and "the" used in the embodiments of the present disclosure and the appended claims are also intended to include plural forms, unless the context clearly indicates otherwise. It should also be understood that, the term "and/or" used herein refers to and includes any or all possible combinations of one or more associated listed items.

It should be understood that, although the terms first, second, third, etc. may be used to describe various information in the embodiments of the present disclosure, this information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the words "if" and "in a case that" as used herein may be interpreted as "at the time of......" or "when......" or "in response to determining that".

The embodiments of the present disclosure are described in detail below, and examples of the embodiments are shown in the accompanying drawings, wherein the same or similar reference numerals throughout represent the same or similar elements. The embodiments described below with reference to the accompanying drawings are exemplary and are intended to be used to explain the present disclosure, and not to limit the present disclosure.

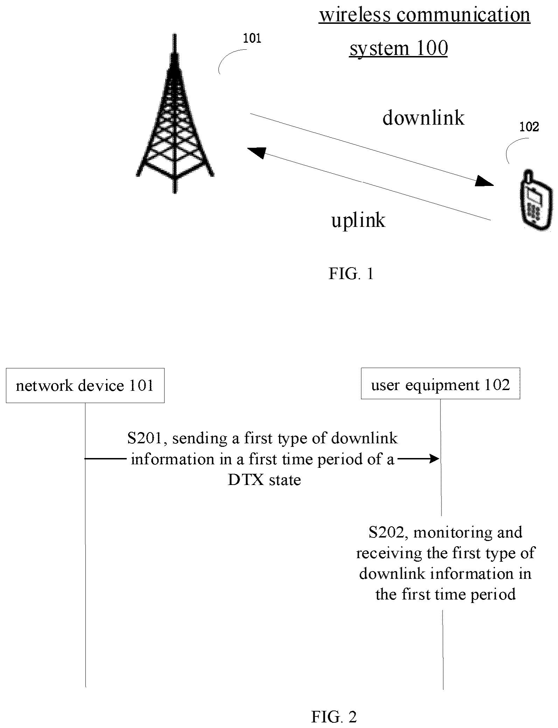

As shown in FIG. 1, a method for sending and receiving downlink information provided by an embodiment of the present disclosure can be applied to a wireless communication system 100, which may include a network device 101 and a user equipment 102. The user equipment 102 is configured to support carrier aggregation and can be connected to a plurality of carrier units of the network device 101, including a main carrier unit and one or more auxiliary carrier units.

It should be understood that the above wireless communication system 100 can be applied to both low-frequency scenarios and high-frequency scenarios. The application scenarios of the wireless communication system 100 include but are not limited to the long term evolution (LTE) system, the LTE frequency division duplex (FDD) system, the LTE time division duplex (TDD) system, the worldwide interoperability for micro wave access (WiMAX) communication system, the cloud radio access network (CRAN) system, the future fifth generation (5th-Generation, 5G) system, the new radio (NR) communication system or the future evolved public land mobile network (PLMN) system, etc.

The user equipment 102 shown above can be a terminal, an access terminal, a terminal unit, a terminal station, a mobile station (MS), a remote station, a remote terminal, a mobile terminal, a wireless communication device, a terminal agent or a terminal device, etc. The user equipment 102 can have a wireless transceiver function, which can communicate with one or more network devices of one or more communication systems (such as wireless communication) and receive network services provided by the network devices, where the network devices include but are not limited to the illustrated network device 101.

The user equipment (UE) 101 may be a cellular phone, a cordless phone, a session initiation protocol (SIP) phone, a wireless local loop (WLL) station, a personal digital assistant (PDA) device, a handheld device with wireless communication functions, a computing device or other processing devices connected to a wireless modem, a vehicle-mounted device, a wearable device, a terminal device in a future 5G network, or a terminal device in a future evolved PLMN network, etc.

The network device 101 may be an access network device (or access network point). The access network device refers to a device that provides network access functions, such as a radio access network (RAN) base station, etc. The network device 101 may specifically include a base station (BS), or include a base station and a wireless resource management device for controlling the base station, etc. The network device 101 may also include a relay station (relay device), an access point, a base station in a future 5G network, a base station in a future evolved PLMN network, or an NR base station, etc. The network device 101 may be a wearable device or a vehicle-mounted device. The network device 101 may also be a communication chip with a communication module.

For example, the network device 101 includes but is not limited to: a next generation base station (gnodeB, gNB) in 5G, an evolved node B (eNB) in an LTE system, a radio network controller (RNC), a node B (NB) in a WCDMA system, a wireless controller under a CRAN system, a base station controller (BSC), a base transceiver station (BTS) in a GSM system or a CDMA system, a home base station (for example, home evolved nodeB, or home node B, HNB), a baseband unit (BBU), a transmitting and receiving point (TRP), a transmitting point (TP) or a mobile switching center, etc.

The embodiment of the present disclosure provides a method for sending and receiving downlink information. Referring to FIG. 2, FIG. 2 is a method for sending and receiving downlink information according to an example embodiment. As shown in FIG. 2, the method includes steps S201~S202, specifically:
step S201, in a first time period of a discontinuous transmission DTX state, the network device 101 sends a first type of downlink information to a user equipment 102; wherein the first time period is a time period in which at least part of the downlink information is not required to be sent in the DTX state.

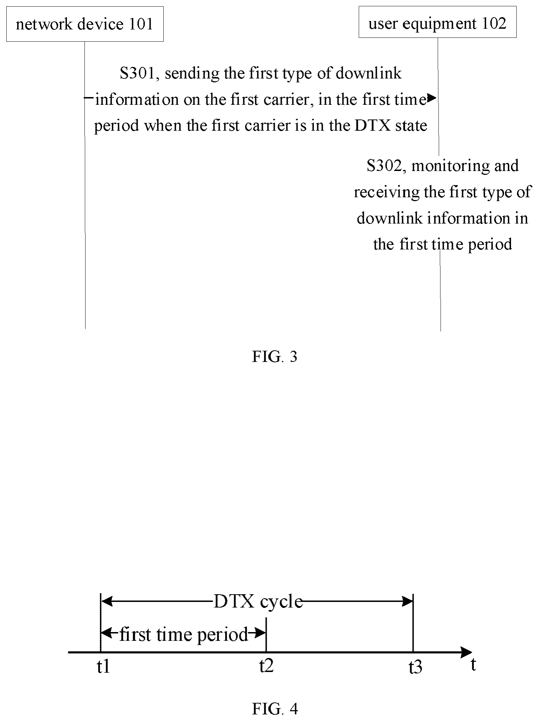

In some possible implementations, the first time period is the DTX-off time period of the DTX state. A DTX-off time period may be included in the DTX state, for example, a DTX cycle may include a DTX-off time period and a DTX-on time period. Referring to FIG. 4, the first time period (t1~t2) is the DTX-off time period, during which the network device 101 can stop sending some downlink information; during the DTX-on time period (t2~t3), the network device 101 can send downlink information normally.

In some possible implementations, in the first time period, the network device 101 does not need to send at least part of the downlink information, for example, including part of the downlink control information (DCI), so as to achieve effective energy saving of the network device 101.

In some possible implementations, the first type of downlink information is at least one of the following:
a Synchronization Signaling Block (SSB);
a Physical Downlink Control Channel (PDCCH) transmitted in the first common search space (CSS);
a Physical Downlink Shared Channel (PDSCH) scheduled by DCI in the first CSS.

In one example, the SSB includes Primary Synchronization Signals (PSS), Secondary Synchronization Signals (SSS), and Physical Broadcast Channels (PBCH).

In this example, sending of the SSB is not affected in the first time period, that is, the network device 101 can maintain sending of the SSB in the first time period, which enables the user equipment 102 to still implement cell search or cell measurement based on the SSB in this time period.

In one example, the first CSS can be the CSS that the user equipment 102 needs to monitor in the idle state of Radio Resource Control (RRC) or the inactive state of RRC.

In this example, since the user equipment 102 in the RRC idle state or inactive state needs to maintain monitoring of the first CSS, the network device 101 needs to maintain the PDCCH transmitted through the first CSS in the first time period. The PDCCH mainly carries DCI.

In one example, corresponding to the previous example, for the DCI carried by the PDCCH transmitted in the first CSS, the PDSCH scheduled by the DCI can still be sent by the network device 101 in the first time period.

In some examples, the network device 101 can also maintain sending of the SSB, the first CSS, and the PDSCH scheduled by the DCI in the first CSS during the first time period.

It can be understood that the network device 101 can configure Type #3 CSS or a specific search space (UE Specific Search Space, USS) for the user equipment 102 entering the RRC connection state. The CSS can be used to send downlink control information of broadcast, multicast, and unicast, and the USS can be used to send downlink control information specific to the user equipment 102. The network device 101 can also configure other types of CSS for the user equipment 102.

In some possible implementations, the first CSS is at least one of the following:
Type 0-PDCCH CSS;
Type 0A-PDCCH CSS;
Type 0B-PDCCH CSS;
Type 1-PDCCH CSS;
Type 1A-PDCCH CSS;
Type 2-PDCCH CSS;
Type 2A-PDCCH CSS.

The above-mentioned first CSS is the CSS that the user equipment 102 needs to monitor even when it is in the RRC idle state or inactive state.

In this implementation, the Type0-PDCCH CSS is configured in the primary cell of the primary cell group, used to send the PDCCH that schedules the System Information Block 1 (SIB1). The Type0A-PDCCH CSS is configured in the primary cell of the primary cell group, used to send the PDCCH that schedules other system information. The Type0B-PDCCH CSS is configured in the primary cell of the primary cell group, used to send the PDCCH that schedules broadcast and multicast information. Type1-PDCCH CSS is configured in the primary cell, used to transmit the PDCCH that schedules random access information. Type1A-PDCCH CSS is configured in the primary cell, used to transmit the PDCCH that schedules small data. Type2-PDCCH CSS is configured in the primary cell of the primary cell group, used to send the PDCCH that schedules paging information. Type2A-PDCCH CSS is configured in the primary cell of the primary cell group, used to send the PDCCH that schedules the Paging Early Indicator (PEI).

In some possible implementations, the network device 101 maintains the sending of the above first type of downlink information in the first time period, which can be applied to any carrier.

For example, in a case that the network device 101 is in the first time period when any carrier is in the DTX state, the network device 101 can still send the first type of downlink information on the carrier, such as sending at least one of the SSB, the first CSS, and the PDSCH scheduled by the DCI in the first CSS.

Step S202, in the first time period, the user equipment 102 monitors and receives the first type of downlink information sent by the network device 101.

In some possible implementations, the user equipment 102 can still monitor at least one of the SSB, the first CSS, and the PDSCH scheduled by the DCI in the first CSS during the first time period.

In some possible implementations, the user equipment 102 can obtain the time domain interval of the first time period, such as the start moment and end moment of the first time period, according to the configuration information of DTX or according to the dynamic indication of the network device 101.

In an example, the configuration information of DTX may include the cycle of DTX, the duration corresponding to the first time period, the starting offset value, etc.

In some possible implementations, the network device 101 may pre-send the configuration information of DTX through high-level signaling. For example, the network device 101 semi-statically configures the configuration information of DTX through RRC signaling or Media Access Control Control Element (MAC CE) signaling.

In some possible implementations, the network device 101 may dynamically indicate information of the DTX state through DCI, such as the start moment and end moment of the first time period.

In the embodiment of the present disclosure, in a first time period when the network device 101 is in a DTX state, the sending of downlink information can be reduced to achieve energy saving; in addition, in the first time period, the network device 101 can still send the first type of downlink information, and the user equipment 102 still monitors the first type of downlink information, so as to receive the first type of downlink information in time and achieve timely communication.

The embodiment of the present disclosure provides a method for sending and receiving downlink information. Referring to FIG. 3, FIG. 3 is a method for sending and receiving downlink information according to an example embodiment. As shown in FIG. 3, the method includes steps S301 to S302, specifically:
step S301, in the first time period when the first carrier is in the DTX state, the network device 101 sends the first type of downlink information to the user equipment 102 on the first carrier.

In some possible implementations, the first type of downlink information sent by the network device 101 on the first carrier may include at least one of the SSB, the first CSS, and the PDSCH scheduled by the DCI in the first CSS.

The first CSS is the CSS that the user equipment 102 needs to monitor when it is in the RRC idle state or inactive state. The first CSS may include a plurality of types, which can be referred to the description of the aforementioned embodiments, and will not be repeated here.

In some possible implementations, for different carriers, the corresponding DTX configuration information may be different. For example, at least one parameter of the DTX cycle, the duration corresponding to the effective time period, or the starting offset value is different among different carriers.

In some possible implementations, the first type of downlink information is: downlink information scheduled before a start moment of the first time period and having a sent moment within the first time period.

In one example, as shown in FIG. 4, the first time period of DTX corresponding to the first carrier is t1~t2, that is, the start moment of the first time period is t1 and the end moment thereof is t2.

In this example, the network device 101 can still send, on the first carrier, downlink information scheduled before t1 and sent between t1 and t2.

In some possible implementations, the first type of downlink information is one of the following:
a physical downlink shared channel PDSCH;
an aperiodic channel state information reference signal CSI-RS.

In one example, as shown in FIG. 4, the downlink scheduling DCI of the network device 101 schedules one or more PDSCHs before t1, and the sending moment of some or all of the one or more PDSCHs is between t1 and t2.

In this example, in the first time period t1~t2, the network device 101 can still send part or all of the PDSCHs on the first carrier.

In one example, as shown in FIG. 4, the downlink scheduling DCI of the network device 101 schedules an aperiodic CSI-RS before t1, and the sending moment of the CSI-RS is between t1 and t2.

In this example, in the first time period t1~t2, the network device 101 can still send the CSI-RS on the first carrier.

Step S302, in a case that the network device 101 is in the first time period when the first carrier is in the DTX state, the user equipment 102 monitors and receives the first type of downlink information sent by the network device on the first carrier.

In some possible implementations, the user equipment 102 can obtain the time domain interval of the first time period corresponding to any carrier, such as the first carrier, such as the start moment and end moment of the first time period, according to the configuration information of DTX or the dynamic indication of the network device 101.

In some possible implementations, the network device 101 can send the configuration information of DTX applicable to any carrier. Alternatively, the configuration information of DTX sent by the network device 101 includes configuration information corresponding to the plurality of carriers, respectively, for example, including configuration information of DTX corresponding to the first carrier.

The configuration information of DTX corresponding to the first carrier may include: the period of DTX corresponding to the first carrier, the duration corresponding to the effective time period, the starting offset value, etc.

In some possible implementations, the user equipment 102 can still monitor at least one of the SSB, the first CSS, and the PDSCH scheduled by the DCI in the first CSS on the first carrier during the first time period.

In some possible implementations, the user equipment 102 can still monitor, on the first carrier during the first time period, the PDSCH scheduled before the start moment of the first time period and having a sent moment within the first time period.

In some possible implementations, the user equipment 102 can still monitor, on the first carrier during the first time period, the aperiodic CSI-RS scheduled before the start moment of the first time period and having a sent moment within the first time period.

In the embodiment of the present disclosure, in a case that the network device 101 is in the first time period when the first carrier is in the DTX state, the network device 101 can still send the first type of downlink information on the first carrier, and the user equipment 102 monitors and receives the first type of downlink information, so that the necessary communication process can be carried out in time on the basis of energy saving.

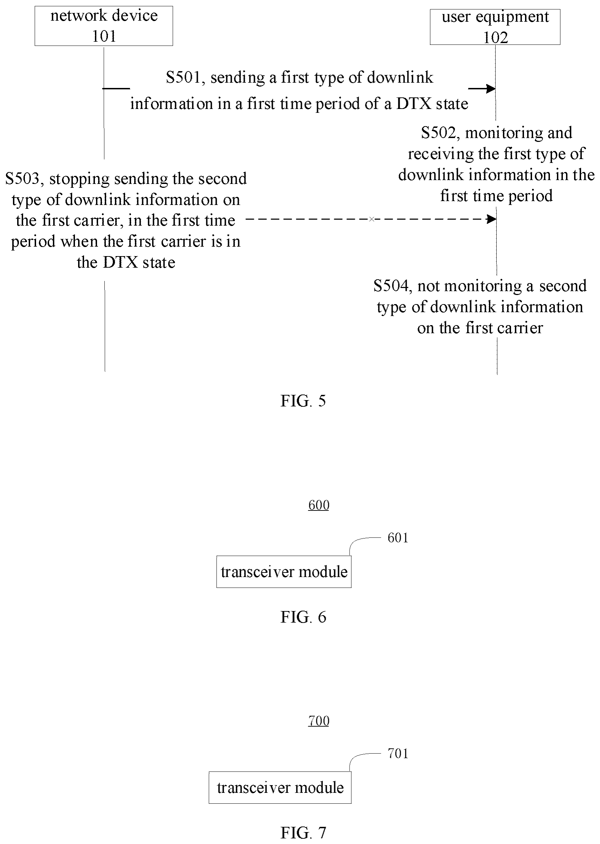

The embodiment of the present disclosure provides a method for sending and receiving downlink information. Referring to FIG. 5, FIG. 5 is a method for sending and receiving downlink information according to an example embodiment. As shown in FIG. 5, the method includes steps S501 to S504, specifically:
step S501, in a first time period of a discontinuous transmission DTX state, the network device 101 sends a first type of downlink information to a user equipment 102; wherein the first time period is a time period in which at least part of the downlink information is not required to be sent in the DTX state.

In some possible implementations, the network device 101 sends at least one of the SSB, the first CSS, and the PDSCH scheduled by the DCI in the first CSS in the first time period. This implementation can be applicable to any carrier.

In some possible implementations, if the network device 101 is in a DTX state on the first carrier, in the first time period of the DTX state, the network device 101 still sends the first type of downlink information on the first carrier.

In one example, the first type of downlink information sent by the network device 101 on the first carrier includes: at least one of SSB, the first CSS, and the PDSCH scheduled by the DCI in the first CSS.

In one example, the first type of downlink information sent by the network device 101 on the first carrier includes: PDSCH scheduled before the start moment of the first time period and having a sent moment within the first time period.

In one example, the first type of downlink information sent by the network device 101 on the first carrier includes: an aperiodic CSI-RS scheduled before the start moment of the first time period and having a sent moment within the first time period.

Step S502, in the first time period, the user equipment 102 monitors and receives the first type of downlink information sent by the network device 101.

In some possible implementations, the user equipment 102 obtains the configuration information of DTX according to the signaling of the network device 101, thereby obtaining the time domain interval of the first time period.

In some possible implementations, the network device 101 may send configuration information of DTX applicable to any carrier. Alternatively, the configuration information of DTX sent by the network device 101 includes configuration information corresponding to a plurality of carriers, respectively, for example, including configuration information of DTX corresponding to the first carrier.

Step S503, in the first time period when the first carrier is in the DTX state, the network device 101 stops sending the second type of downlink information on the first carrier.

The order between steps S501 and S503 is only for illustration, and there is no strict order limit between them two. The execution order is related to whether the downlink information is the first type of downlink information or the second type of downlink information.

In some possible implementations, the second type of downlink information is: semi-persistent transmission downlink information activated before the start moment of the first time period.

The configuration information corresponding to the semi-persistent transmission downlink information can be activated and deactivated by DCI or MAC CE signaling of the network device 101.

In this implementation, referring to FIG. 4, in the first time period t1~t2, for example, starting from the start moment t1 of the first time period, the semi-persistent transmission downlink information that has been activated is regarded as deactivated. Therefore, the network device 101 stops sending the semi-persistent transmission downlink information on the first carrier in the first time period.

In some possible implementations, the second type of downlink information is one of the following:
a semi-persistent scheduling (SPS) PDSCH;
a semi-persistent CSI-RS.

In an example, as shown in FIG. 4, the configuration of SPS PDSCH is activated before the start moment t1 of the first time period. In a case that the network device 101 is in the first time period when the first carrier is in the DTX state, from t1, the configuration of SPS PDSCH is regarded as deactivated, and the network device 101 stops sending the semi-persistent scheduling PDSCH on the first carrier.

In an example, as shown in FIG. 4, the configuration of semi-persistent CSI-RS is activated before the start moment t1 of the first time period. In a case that the network device 101 is in the first time period when the first carrier is in the DTX state, from t1, the configuration of semi-persistent CSI-RS is regarded as deactivated, and the network device 101 stops sending semi-persistent CSI-RS on the first carrier.

In some possible implementations, the time when the semi-persistent transmission downlink information is regarded as deactivated may also be the time when the user equipment 102 receives the indication information. The indication information is used to indicate that the network device 101 will enter the DTX state.

In one example, before step S503, such as before step S501, the method further includes step S500, specifically: step S500, the network device 101 sends indication information to the user equipment 102, and the indication information is used to indicate that the network device 101 will enter the DTX state.

In this example, the indication information is used as a dynamic DTX instruction, to notify the user equipment 102 that the network device 101 will enter the DTX state. After receiving the indication information, the user equipment 102 considers that the network device 101 is in the DTX state, and may consider that the semi-persistent transmission downlink information is deactivated.

In this example, the network device 101 may send the indication information through RRC signaling, MAC CE, or DCI.

In some possible implementations, the time when the semi-persistent transmission downlink information is regarded as deactivated may also be the time when the indication information takes effect after the user equipment 102 receives the indication information.

In one example, after the user equipment 102 receives the indication information for a set duration, the indication information takes effect, and the user equipment 102 determines that the semi-persistent transmission downlink information is deactivated after the set duration of receiving the indication information.

For example, if the network device 101 sends the indication information by sending DCI, the indication information may take effect in the next time slot received by the user equipment 102. Assuming that the user equipment 102 receives the DCI in time slot n, the indication information in the DCI takes effect at slot (n+1). Thus, the user equipment 102 determines that the semi-persistent transmission downlink information in slot (n+1) is deactivated.

For another example, if the network device 101 sends the indication information by sending MAC CE, the indication information may take effect after k time slots received by the user equipment 102. Assuming that the user equipment 102 receives the DCI in time slot n, the indication information in the DCI takes effect at slot (n+k). Thus, the user equipment 102 determines that the semi-persistent transmission downlink information in slot (n+k) is deactivated.

In some possible implementations, the second type of downlink information is at least one of the following:
a periodic CSI-RS;
dedicated DCI sent to the user equipment;
DCI sent in user equipment specific search space USS.

In one example, referring to FIG. 4, the network device 101 can stop sending the periodic CSI-RS on the first carrier from the start moment t1 of the first time period.

In one example, for the periodic CSI-RS, when the sending time of the network device 101 on the first carrier is in the first time period, the network device 101 can stop sending the periodic CSI-RS on the first carrier. While outside the first time period, the network device 101 can normally send the periodic CSI-RS according to the period of the periodic CSI-RS.

In one example, the second type of downlink information includes: dedicated DCI sent to the user equipment 102, and/or, DCI sent in the user equipment specific search space USS.

The dedicated DCI (UE-dedicated DCI or UE-specific DCI) sent by the network device 101 to the user equipment 102 is the DCI received only by the user equipment 102, and other user equipment will not receive the dedicated DCI. The above-mentioned dedicated DCI can be transmitted in the common search space CSS or in the USS.

It is worth noting that only the dedicated DCI of the UE can be transmitted in the USS.

Step S504, the user equipment does not monitor a second type of downlink information on the first carrier, in a case that the network device 101 is in the first time period when the first carrier is in the DTX state.

In some possible implementations, in the first time period corresponding to the first carrier, the user equipment 102 does not monitor the semi-persistent transmission downlink information activated before the start moment of the first time period on the first carrier.

In some possible implementations, corresponding to step S500, the method further includes step S500', specifically:
step S500', after receiving the indication information sent by the network device 101, the user equipment 102 determines that the second type of downlink information is deactivated, and the indication information is used to indicate that the network device 101 will enter the DTX state.

In this implementation, when the user equipment 102 receives the indication information, it considers that the semi-persistent transmission downlink information activated before the start moment of the first time period is deactivated, that is, it is no longer necessary to monitor the semi-persistent transmission downlink information.

In one example, the time when the user equipment 102 receives the indication information may be before the start moment of the first time period.

For example, for the SPS PDSCH activated before the start moment of the first time period, the user equipment 102 considers that the SPS PDSCH is deactivated after receiving the indication information. Therefore, in the first time period corresponding to the first carrier, the user equipment 102 does not monitor the SPS PDSCH on the first carrier.

For another example, for the semi-persistent CSI-RS activated before the start moment of the first time period, the user equipment 102 considers that the semi-persistent CSI-RS is deactivated after receiving the indication information. Therefore, in the first time period corresponding to the first carrier, the user equipment 102 does not monitor the semi-persistent CSI-RS on the first carrier.

In some possible implementations, in the first time period corresponding to the first carrier, the user equipment 102 does not monitor the periodic CSI-RS on the first carrier.

In the embodiment of the present disclosure, when the network device 101 is in the DTX state, the network device 101 can maintain the sending of the first type of downlink information, and the user equipment 102 correspondingly maintains the monitoring and receiving of the first type of downlink information, to maintain necessary communication. In addition, the network device 101 can stop the sending of the second type of downlink information, and the user equipment 102 correspondingly does not monitor the second type of downlink information, to further reduce unnecessary downlink information transmission and achieve energy saving of the network device 101 and the user equipment 102.

Based on the same concept as the above method embodiments, the embodiment of the present disclosure also provides a network device 101 for executing the steps performed by the network device 101 provided in the above embodiments.

In a possible implementation, the apparatus 600 shown in FIG. 6 can be used as the network device 101 involved in the above method embodiments, and execute the steps executed by the network device 101 in the above method embodiments.

The apparatus 600 includes a transceiver module 601, wherein the transceiver module 601 can be used to support the communication apparatus for communication.

The transceiver module 601 is configured to send a first type of downlink information to a user equipment in a first time period of a discontinuous transmission DTX state; wherein the first time period is a time period in which at least part of the downlink information is not required to be sent in the DTX state.

Based on the same concept as the above method embodiment, the embodiment of the present disclosure also provides a user equipment 102, for executing the steps executed by the user equipment 102 provided in the above embodiments.

In a possible implementation, the apparatus 700 shown in FIG. 7 can be used as the user equipment 102 involved in the above method embodiments, and execute the steps executed by the user equipment 102 in the above method embodiments.

The apparatus 700 includes a transceiver module 701, wherein the transceiver module 701 can be used to support the communication apparatus for communication.

The transceiver module 701 is configured to monitor and receive a first type of downlink information sent by a network device in a first time period when the network device is in a DTX state, wherein the first time period is a time period in which at least part of the downlink information is not required to be sent in the DTX state.

The embodiment of the present disclosure also provides a communication apparatus, including a processor and a memory, wherein
the memory is used to store a computer program;
the processor is used to execute the computer program to implement the method executed by the network device 101.

The embodiment of the present disclosure also provides a computer-readable storage medium, wherein the computer-readable storage medium stores instructions, and the instructions enable the computer to execute the method executed by the network device 101 when called and executed on the computer.

The embodiment of the present disclosure also provides a communication apparatus, including a processor and a memory, wherein
the memory is used to store a computer program;
the processor is used to execute the computer program to implement the method executed by the user equipment 102.

The embodiment of the present disclosure also provides a computer-readable storage medium, wherein the computer-readable storage medium stores instructions, and the instructions enable the computer to execute the method executed by the user equipment 102 when called and executed on the computer.

After considering the specification and practicing the invention disclosed herein, those skilled in the art will easily think of other implementations of the disclosed embodiments. This application is intended to cover any variation, use, or adaptive change of the disclosed embodiments, which follows the general principles of the disclosed embodiments and includes common knowledge or customary technical means in the technical field that are not disclosed in the present disclosure. The specification and embodiments are only to be regarded as exemplary, and the true scope and spirit of the disclosed embodiments are indicated by the following claims.

It should be understood that the disclosed embodiments are not limited to the precise structure described above and shown in the accompanying drawings, and various modifications and changes can be made without departing from the scope thereof. The scope of the disclosed embodiments is limited only by the attached claims.

### INDUSTRIAL APPLICABILITY

In the method of the present disclosure, in a first time period when the network device is in a DTX state, the sending of downlink information can be reduced to achieve energy saving; in addition, the network device can still send the first type of downlink information in the first time period, to ensure timely communication can be achieved.

## Claims

1. A method for sending downlink information, performed by a network device, the method comprising:
sending a first type of downlink information to a user equipment in a first time period of a discontinuous transmission DTX state; wherein the first time period is a time period in which at least part of the downlink information is not required to be sent in the DTX state.

2. The method according to claim 1, wherein sending a first type of downlink information to a user equipment in a first time period of a discontinuous transmission DTX state comprises:
sending the first type of downlink information to the user equipment on a first carrier, in the first time period when the first carrier is in the DTX state.

3. The method according to claim 2, wherein the first type of downlink information is: downlink information scheduled before a start moment of the first time period and having a sent moment within the first time period.

4. The method according to claim 3, wherein the first type of downlink information is one of the following:
a physical downlink shared channel PDSCH;
an aperiodic channel state information reference signal CSI-RS.

5. The method according to claim 1 or 2, wherein the first type of downlink information is at least one of the following:
a synchronization signal block SSB;
a physical downlink control channel PDCCH transmitted in a first common search space CSS;
a PDSCH scheduled by downlink control information DCI in the first CSS.

6. The method according to any one of claims 1 to 5, further comprising:
stopping sending a second type of downlink information on a first carrier, in the first time period when the first carrier is in the DTX state.

7. The method according to claim 6, wherein the second type of downlink information is: semi-persistent transmission downlink information activated before a start moment of the first time period.

8. The method according to claim 7, wherein the second type of downlink information is one of the following:
a semi-persistent scheduling PDSCH;
a semi-persistent CSI-RS.

9. The method according to claim 7 or 8, further comprising:
sending indication information to the user equipment, wherein the indication information is used to indicate that the network device is about to enter the DTX state.

10. The method according to claim 6, wherein the second type of downlink information is at least one of the following:
a periodic CSI-RS;
dedicated DCI sent to the user equipment;
DCI sent in user equipment specific search space USS.

11. A method for receiving downlink information, performed by a user equipment, the method comprising:
monitoring and receiving a first type of downlink information sent by a network device in a first time period when the network device is in a DTX state, wherein the first time period is a time period in which at least part of the downlink information is not required to be sent in the DTX state.

12. The method according to claim 11, wherein monitoring and receiving a first type of downlink information in a first time period when the network device is in a DTX state comprises:
monitoring and receiving the first type of downlink information sent by the network device on a first carrier, in a case that the network device is in the first time period when the first carrier is in the DTX state.

13. The method according to claim 12, wherein the first type of downlink information is: downlink information scheduled before a start moment of the first time period and having a sent moment within the first time period.

14. The method according to claim 13, wherein the first type of downlink information is one of the following:
a physical downlink shared channel PDSCH;
an aperiodic channel state information reference signal CSI-RS.

15. The method according to claim 11 or 12, wherein the first type of downlink information is at least one of the following:
an SSB;
a PDCCH transmitted in a first CSS;
a PDSCH scheduled by DCI in the first CSS.

16. The method according to any one of claims 11 to 15, further comprising:
the user equipment not monitoring a second type of downlink information on a first carrier, in a case that the network device is in the first time period when the first carrier is in the DTX state.

17. The method according to claim 16, wherein the second type of downlink information is: semi-persistent transmission downlink information activated before a start moment of the first time period.

18. The method according to claim 17, wherein the second type of downlink information is one of the following:
a semi-persistent scheduling PDSCH;
a semi-persistent CSI-RS.

19. The method according to claim 17 or 18, further comprising:
determining that the second type of downlink information is deactivated after receiving the indication information sent by the network device, wherein the indication information is used to indicate that the network device is about to enter the DTX state.

20. The method according to claim 16, wherein the second type of downlink information is at least one of the following:
a periodic CSI-RS;
dedicated DCI of the user equipment;
DCI sent in user equipment specific search space USS.

21. A network device, comprising:
a transceiver module, configured to send a first type of downlink information to a user equipment in a first time period of a discontinuous transmission DTX state; wherein the first time period is a time period in which at least part of the downlink information is not required to be sent in the DTX state.

22. A user equipment, comprising:
a transceiver module, configured to monitor and receive a first type of downlink information sent by a network device in a first time period when the network device is in a DTX state, wherein the first time period is a time period in which at least part of the downlink information is not required to be sent in the DTX state.

23. A communication apparatus, comprising a processor and a memory, wherein,
the memory is configured to store a computer program;
the processor is configured to execute the computer program to implement the method according to any one of claims 1-10.

24. A communication apparatus, comprising a processor and a memory, wherein,
the memory is configured to store a computer program;
the processor is configured to execute the computer program to implement the method according to any one of claims 11-20.

25. A computer-readable storage medium, wherein the computer-readable storage medium stores instructions, and the instructions enable a computer to execute the method according to any one of claims 1-10 when called and executed on the computer.

26. A computer-readable storage medium, wherein the computer-readable storage medium stores instructions, and the instructions enable a computer to execute the method according to any one of claims 11-20 when called and executed on the computer.

27. A communication system, comprising a network device and a user equipment, wherein,
the network device is configured to execute the method according to any one of claims 1-10;
the user equipment is configured to execute the method according to any one of claims 11-20.
